# EUROPEAN PATENT APPLICATION

(11) **EP 0 599 403 A2**
(43) Date of publication of application: **01.06.1994**
(21) Application number: 93203221.2
(22) Date of filing: 17.11.1993
(51) Int. Cl.: C03B 5/173, C03B 3/00

(54) **Process and apparatus for coloring glass**

(30) Priority: 24.11.1992 US 981854
(71) Applicant: LIBERTY GLASS COMPANY, Sapulpa Oklahoma 74066 (US)
(72) Inventor: Argent, Ronald D., Pittsburgh, Pennsylvania 15101 (US); Bolin, James A., Tulsa, Oklahoma 74137 (US)
(74) Representative: Prins, Hendrik Willem

(57) **Abstract**

A method and apparatus for the production of colored glass includes the steps of diverting a stream of clear molten glass from at least one glass melting furnace to a color treatment chamber. A measured amount of a color additive is introduced to the molten stream of clear glass prior to entry into the treatment chamber. Cold or preheated cullet of a clear or selected color is added to a charging end of the treatment chamber. The treatment chamber is heated to melt the cullet and further heat the remaining feedstock. The molten mixture of cullet, clear glass and raw material color additive is stirred by pulsed bubbling within the treatment chamber to chemically and thermally homogenize the mixture. A second stirring zone is provided adjacent an exit end of the treatment chamber to insure complete chemical and thermal homogenization of the colored glass melt prior to glass forming. A bypass channel is provided at the exit end of the chamber to permit sampling of the treated glass prior to glass forming. A valve blocks the flow of colored glass from the outlet region of the chamber while sampling takes place permitting clear glass production to continue on the designated colored glass forming machine until the proper color is obtained. Heated valve members are positioned in the glass transport channels to regulate the flow rate and glass level and to provide selective shut off of individual glass streams.

## Description

### BACKGROUND OF THE INVENTION

The present invention relates generally to the manufacture of glass and, more particularly, to the high volume production of glass containers wherein both colored glass and clear glass containers may be produced simultaneously.

Heretofore, it has been common to either dedicate an entire glass melting furnace to the production of colored glass or to treat clear glass produced by a melting furnace by adding a color concentrate upstream of the glass forming machine in a forehearth region. Such known forehearth coloring technology has several shortcomings, the more notable being the limitation on glass throughput; the high raw material cost of color concentrates; as well as the high maintenance costs and associated downtime of the mechanical color stirrers. In addition, certain color additions requiring longer dwell times or higher melting temperatures, such as that required for producing amber colored glass, for example, cannot be produced by the forehearth coloring technique.

In prior attempts to increase throughput and production flexibility of colored glass, it has been proposed to utilize a so-called "color cell". The prior color cell employed a vertical flow-through refractory structure which diverted clear glass flow from a melting furnace. Color concentrates were added along with colored cullet and melted in an electrically heated zone within the color cell. Mechanical stirrers were situated in a discharge portion of this prior arrangement in order to achieve homogeneous color and temperature. Energy costs as well as raw material costs were relatively high in this prior color treatment process, while production rates were concurrently low, on the order of about three tons per day.

The present invention solves many of the problems of the prior art by providing a process and apparatus for the simultaneous production of clear and colored glass at production throughput rates of up to 200 tons of glass per day. The present invention utilizes high levels of colored cullet and coloring agents in raw material form to provide greater plant throughput, while achieving significant material cost reduction and increased cullet usage than heretofore possible.

The present invention further provides a system in which the existing glass melting furnaces in a glass plant supply hot glass to the apparatus of the invention. In this manner, the existing melting furnaces realize a longer refractory life and operate at lower fuel consumption levels by producing clear glass only.

Still further, the glass coloring system of the present invention melts the cullet outside of the existing clear glass melting furnaces, to increase production capacity for the entire facility while providing rapid color changes with a minimum of downtime. Clear glass production proceeds simultaneously with or in place of colored glass production or during such color changeover periods.

The present invention, in addition, provides a method and apparatus for mixing, treating and homogenizing clear molten glass with hot or cold cullet and raw material coloring agents which produces colored glass of superior quality, high throughput rates and at low cost relative to known coloring systems.

### SUMMARY OF THE INVENTION

Briefly stated, the present invention contemplates a method and apparatus for the production of colored glass. The method of the invention includes the steps of diverting a stream of clear molten glass from at least one glass melting furnace and introducing the stream to a refractory lined, color treatment chamber or box. A controlled amount of a selected coloring agent, preferably in raw material form, is added to the molten stream of clear glass in a heated, dust-free zone of an inlet channel whereupon the mixture moves through a downflow riser to a horizontal throat and thence to the interior of the color treatment chamber. Cold or preheated cullet of selected color is added to a charging end of the treatment chamber adjacent to the throat inlet. The interior of the chamber is heated to melt the cullet while the cullet, clear glass and raw material coloring agent are stirred and homogenized by controlled bubbling in a mixing zone of the treatment chamber. A second mixing zone is provided adjacent an exit end of the treatment chamber to act as a barrier to prevent the premature passage of unhomogenized feed stock. This insures complete chemical and thermal homogenization of the colored glass melt prior to exiting the chamber. The homogenized, colored glass exits the treatment chamber preferably by way of a horizontally extending throat and an upflow vertical riser. A bypass channel is provided at the top of the riser to permit sampling of the treated glass prior to glass forming. A movable refractory gate or other valve means blocks the flow of hot colored glass from the outlet region of the treatment chamber while sampling takes place. This arrangement permits clear glass production to continue on the designated colored glass forming machine until the proper color is obtained, whereupon the refractory gate or other valve means is opened and colored glass is directed to the glass forming machine. Simultaneously, clear glass may be directed from the glass melting furnace or furnaces to a plurality of glass forming machines for the production of clear shapes.

In a preferred mode of operation, streams of hot clear glass are directed to the color treatment chamber from two or more glass melting furnaces. The cullet, hot glass and color additive enter the treatment chamber under controlled volumetric and temperature conditions. Controlled amounts of color additive are added to each clear glass stream in accordance with the respective flow rates of each hot glass stream. Charging means for the cullet and color additive are linked by programmable controllers to glass level sensors and to the glass melting furnace or furnaces to achieve optimum steady state process control.

In accordance with the invention, hot clear glass is directed from one or more glass melting furnaces to the color treatment chamber of the invention while, simultaneously, clear glass shapes are being produced from such furnaces. Colored glass production, likewise, proceeds simultaneously on one or more glass forming machines being fed by the color treatment chamber from feedstock which includes hot clear glass, hot or cold colored cullet and a raw material color additive.

These, as well as other objects and advantages of the present invention, will become apparent when reference is made to the appended drawings taken with the accompanying detailed description.

### BRIEF DESCRIPTION OF THE DRAWINGS

Figure 1 is a partial schematic, plan view of the apparatus of the invention in operation with two glass melting furnaces;
Figure 2 is a partial, cross-sectional, elevational view of an inlet end of the color treatment chamber of the invention;
Figure 3 is a fragmented, cross-sectional, plan view of the apparatus depicted in Figure 2;
Figure 4 is a partial, cross-sectional, side elevation view of the inlet end of the color treatment chamber including a cullet charger apparatus adjacent thereto;
Figure 5 is a side elevation view of a cullet charger having a color additive hopper and movable distributor fitted thereon;
Figure 5a is a front elevation view of the charger and color additive hopper of Figure 5;
Figure 6 is a partial, cross-sectional view of an inlet end of a further embodiment of the treatment chamber, similar to Figure 2;
Figure 7 is a partial, cross-sectional, side elevation view of the treatment chamber of Figure 6, including a cullet charger apparatus adjacent thereto;
Figure 8 is a side elevation view of a rotatable valve element of the invention having an external screw thread for injecting color additive to a stream of clear glass;
Figure 9 is a cross-sectional, side elevation view of a valve element similar to Figure 8 but having an internal screw thread for injecting color additive into a stream of glass;
Figure 9a is a side elevation view of yet another embodiment of a color additive device similar to Figure 9 but having a hydraulic ram assist;
Figure 10 is a fragmented plan view of a glass transport channel;
Figure 11 is a cross-sectional view of the glass transport channel taken along line XI-XI in Figure 10;
Figure 12 is a plan view of a glass transport channel having flow deflectors therein;
Figure 13 is a schematic, partial plan view of a charging end of the treatment chamber;
Figure 14 is a schematic, plan view of the color chamber and a preheat system according to the present invention;
Figure 15 is a cross-sectional, side elevation view of a glass level and flow control valve of the invention;
Figure 16 is a plan view of a valve block of the control valve of Figure 15;
Figure 17 is a cross-sectional, side view of the valve block taken along line XVII-XVII of Figure 16; and
Figure 18 is a fragmented, cross-sectional, side elevation view of a glass transport channel and a portion of the color treatment chamber depicting a further embodiment of a color additive means and flow control valve.

### DETAILED DESCRIPTION OF THE INVENTION

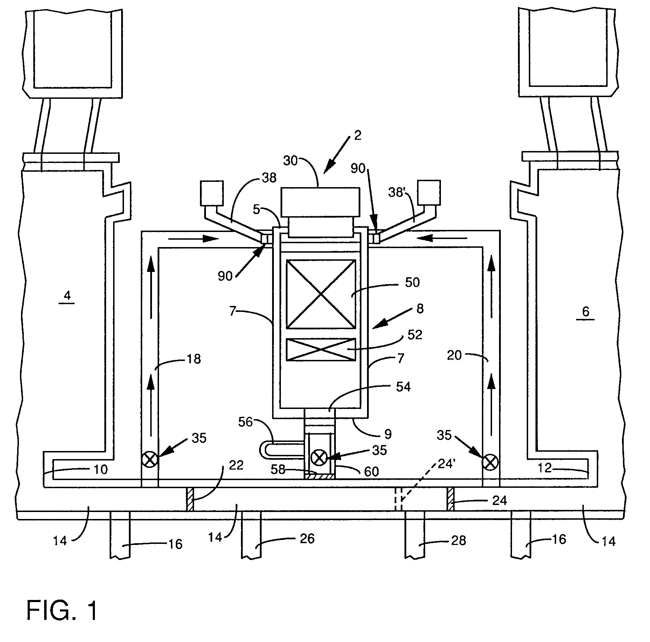

Referring now to the drawings, Figure 1 is a schematic plan view of the invention generally designated 2, shown in use with two conventional glass melting furnaces 4 and 6. A color treatment chamber or color box 8 of the invention is situated between the glass melting furnaces 4 and 6. The glass melting furnaces 4 and 6 preferably produce clear molten glass which exits the respective melting furnaces at outlets 10 and 12 to a primary glass distribution channel 14, which is common to both furnaces. A plurality of secondary glass distribution channels 16 communicate with the primary channel 14 to carry clear molten glass to conventional glass forming machines (not shown) for the production of glass containers, such as bottles or jars, for example.

A pair of hot glass transport channels 18 and 20 communicate at a first end with the primary distribution channel 14 and at respective second ends with the color treatment chamber 8. The glass transport channels 18 and 20 carry molten glass, preferably clear glass, to a charging end 5 of the treatment chamber 8. Flow preventers in the form of refractory plates 22 and 24 are removably positioned in the primary distribution channel 14 to divert respective streams of hot glass from the furnace 4 through the glass transport channel 18 as well as from the glass melting furnace 6 through the glass transport channel 20 and thence to the treatment chamber 8. Secondary distribution channels 26 and 28 are selectively blocked from receiving clear glass from the melting furnaces by virtue of the positioning of flow preventers 22 and 24. Secondary distribution channels 26 and 28 also communicate with additional glass forming machines and are adapted to receive colored glass or clear glass, as will be discussed in greater detail hereinafter.

Use of the removable flow preventers 22 and 24 provides flexibility in running clear and/or colored glass to one or more of the plurality of glass forming machines. For example, the distribution channel 28 may be converted from colored glass to clear glass simply by repositioning flow preventer 24 to the position 24' shown by phantom lines in Figure 1 of the drawings.

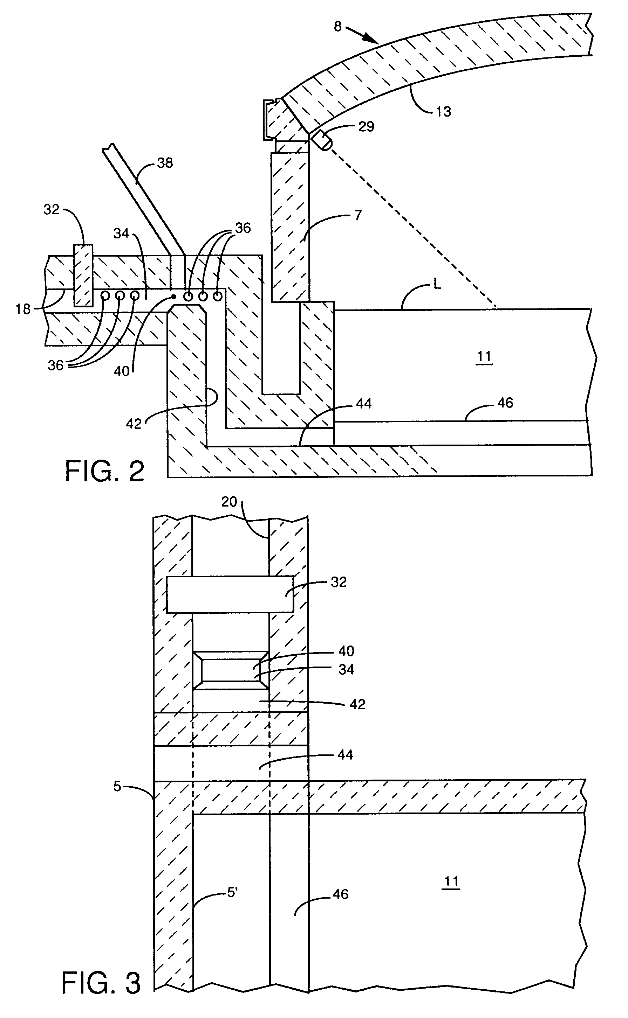

The color treatment chamber 8 is refractory lined and is generally rectangular in plan view, having opposed elongated sides 7 joined by a wall at the aforesaid charging end 5 and by a wall at an outlet end 9, with an enclosing roof 13. A reciprocating blanket type charger apparatus 30 is situated at an opening in the charging end 5 for the introduction of cullet into the chamber 8, as will be explained in greater detail hereinafter. The chamber 8 further includes a glass containment region 11, Figure 2, for thermally treating and homogenizing the bath of hot colored glass.

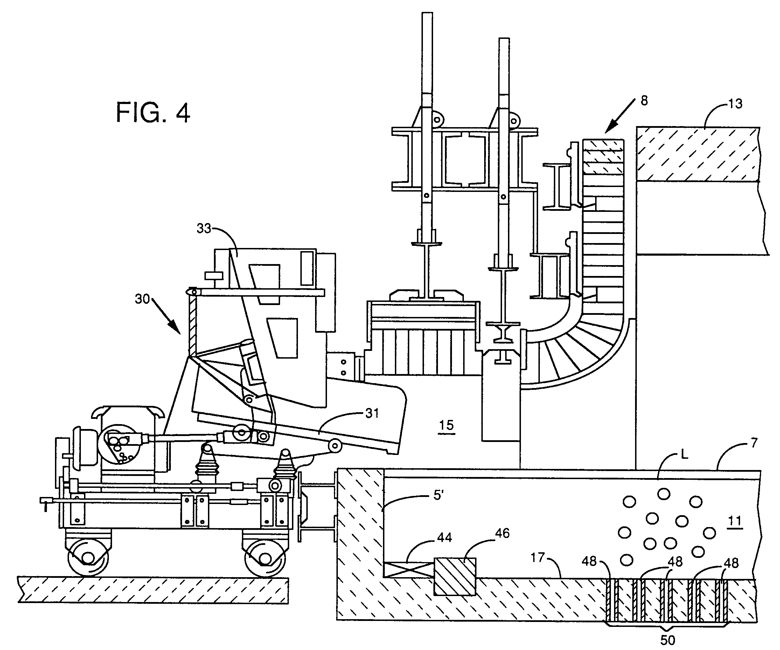

As seen in greater detail in Figures 2 and 3, hot clear glass from glass melting furnace 4 flows through the enclosed glass transport channel 18, passing beneath a forehearth skimmer block 32 and enters a color additive chamber 34. A plurality of rod-shaped electrical resistance heater elements 36 extend within the color additive chamber 34. A color additive of selected color, preferably in raw material form, is introduced into the stream of molten clear glass by way of an inlet conduit 38. Well-known coloring agents in raw material form, such as chromic oxide Cr₂O₃, or chromium trioxide CrO₃ may be utilized to produce a green colored glass; cobalt oxides may be used to produce a blue glass; and carbon-sulfur compounds may be employed to produce an amber color, for example.

The color additive chamber 34 includes a flow rate accelerator area defined by the reduced cross section region 40. The reduced cross section region 40 causes the hot glass and color additive mixture to reach a maximum forward velocity and prevents unwanted backflow of the color additive into the clear glass transport channel 18. The mixture of hot clear glass and color additive raw material moves from the flow accelerator area of the reduced cross sectional region 40 through a downflow vertical riser 42 and thence to a horizontally extending throat conduit 44 for entry into the containment region 11 of the treatment chamber 8. The throat conduit 44 is located at the charging end 5 between the end wall 5' and a floor positioned weir 46 which extends transversely across the width of the chamber 8, Figure 3.

The treatment chamber 8 is heated by a combustion heating system firing above the hot glass surface L. The heating system preferably is a low NO_{X} or a no NO_{X} system utilizing conventional regenerative burners or oxy-gas firing or a combination of any existing known technology. As a result of the method of introducing the particulate color additive feedstock materials within enclosed zone 34, no particulate material collection devices are required in order to control harmful emissions from the chamber 8.

As a consequence of the substantially dust free space existing above the glass line L in the chamber 8, it is possible to employ one or more continuous reading optical pyrometers 29 (Figure 2) to monitor the hot glass temperature. Optical pyrometer 29 senses the infrared radiation emitted from the hot glass in a known manner. Heretofore, optical pyrometers typically have not been used in glass furnaces due to the high level of particulates in the atmosphere.

With reference to Figure 4, the charging end 5 of the treatment chamber 8 includes an open "dog house" region 15 above the rear end wall 5' to permit the charging of cullet by way of the conventional blanket charger 30. Blanket chargers of this type are well-known in the glass industry for charging raw batch to glass melting furnaces. The blanket charger 30 includes a reciprocating charger plate 31 movably positioned across the open dog house region 15 for charging the cullet feedstock supplied from a hopper 33 onto a surface L of a molten bath of glass. The cullet charge enters the treatment chamber 8 at charging end 5 along with the mixture of clear molten glass and color additives which are introduced through the conduits 44. These feedstock materials then move over the weir 46 and into the containment region 11 of the treatment chamber 8 wherein the feedstock undergoes thermal treatment and homogenization.

A plurality of orifices 48 are formed along the floor 17 of the containment region 11 to define a first mixing zone 50 in the rear two thirds of the color treatment chamber 8. Pressurized air is introduced through the orifices 48 to develop a controlled pulse bubbling action in the molten glass bath so as to impart a stirring and blending action within the molten glass. The pulsed bubbling in the mixing zone 50 moves the lower portion of the glass toward the surface L. This stirring action results in both a chemical and thermal homogenization of the melted feedstock materials. The stirring movement also improves the heat transfer from above the glass surface so as to create a uniform temperature profile. The treated glass gradually moves toward the outlet end 9 of the treatment chamber 8 and becomes more homogenized both in color and in temperature as it traverses the length of the treatment chamber. As the treated glass moves toward the outlet end 9, the intensity of the air bubbling action increases in a second mixing zone 52, Figure 1. The second mixing zone 52, likewise, includes an array of spaced-apart orifices in the floor of the containment region 11 for the introduction of pulsed air bubbles into the bath in the same manner as first mixing zone 50. The bubbling action provided by the second mixing zone 52 acts as a secondary barrier to the moving glass and minimizes the potential for any unhomogenized feedstock materials from passing through the chamber 8 without first being completely blended. The second mixing zone 52, thus, provides maximum chemical and thermal homogenization of the colored glass.

Still referring to Figure 1, the treated, colored glass exits the chamber 8 by way of a horizontal throat and vertical upflow riser 54 located at outlet end 9. A glass sampler bypass channel 56 is situated downstream of the outlet riser 54 to permit quality control glass sampling to take place. A glass outlet channel 60 extends between the outlet throat and riser 54 of the chamber 8 to the primary distribution channel 14. A plate type flow preventer 58 or other valve means 35 is positioned at the end of the glass outlet channel 60 to prevent the flow of colored glass from the chamber 8 until the sampling is completed and the quality of the colored glass is satisfactory prior to commencing a production run. During the colored glass sampling procedure, clear glass production preferably continues on the glass forming machines being fed by the secondary distribution channels 16. When colored glass production is to commence, the flow preventer plate 58 is removed from the channel 60 or valve means 35 is opened to permit hot colored glass flow to the distribution channel 14. The colored glass then flows to secondary distribution channels 26 and 28 to appropriate glass forming machines communicating therewith for the production of colored glass containers, for example.

It will be readily apparent to those skilled in the art that the color treatment chamber 8 of the present invention provides additional plant versatility in the manufacture of colored glass. The chamber 8 is adapted to receive hot clear glass or hot colored glass from one, two or three or more furnaces. In the embodiment shown in Figure 1, treatment chamber 8 receives hot glass from melting furnaces 4 and 6 simultaneously while these primary melting furnaces are producing glass shapes on respective forming machines being fed through distribution channels 14 and 16. Furnace 4, for example, may be running clear glass while furnace 6 is running a colored glass. In such a situation, the clear glass flowing to the chamber 8 by way of transport channel 18 would receive additional color additive through the conduit 38 relative to the hot colored glass streams from furnace 6 delivered through transport channel 20. In accordance with the invention, feedstocks of various shades of a color or clear glass are introduced in chamber 8 and treated to achieve a desired color value. In addition, the cullet material which is introduced into the treatment chamber by charger 30 may, likewise, be colored or clear, recycled glass. The cullet may be preheated or cold. Thus, cullet or hot glass of a lighter or darker color value than the end product may be charged into the chamber 8 wherein the proper color value is obtained by balancing the amounts of color additive and/or colored cullet charges.

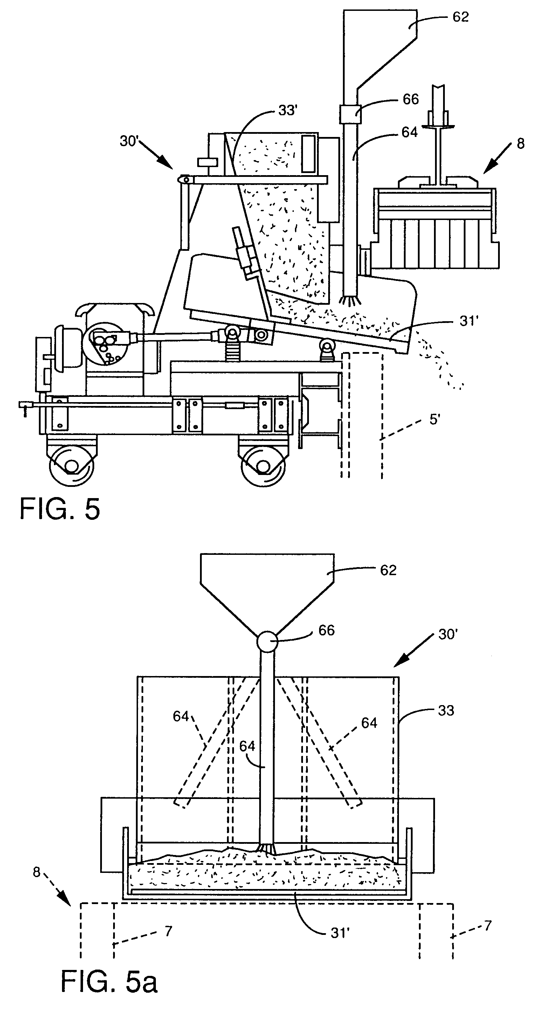

In the event only one of the transport channels 18 or 20 is supplying hot glass to the chamber 8, a specialized cullet charger 30' shown in Figures 5 and 5a, may be employed. Charger 30' includes a color additive hopper 62 located in front of the cullet hopper 33'. The color additive hopper includes a movable distribution spout 64 with a pivot joint 66. The distribution spout 64 pivotally swings in a lateral direction across the width of the charger plate 31, Figure 5a, to provide an even distribution of color additive on top of the bed of cullet being delivered to the treatment chamber 8.

The following working example demonstrates the flexibility of the process and apparatus of the invention. In a two-furnace arrangement as shown in Figure 1, an output requirement of 170 tons per day of colored glass from the treatment chamber 8 is established for production purposes. Cold cullet of green, recycled glass is introduced at the charging end 5 by way of the charger 30 at the rate of 50 tons per day. Hot clear glass from glass melting furnace 4 is introduced into the chamber 8 by way of the glass transport channel 18 at a flow rate of 60 tons per day. A green color additive in the form of chromic oxide raw material is introduced at inlet conduit 38 to the hot clear glass stream at a 3 wt. % mix ratio relative to the feedstock stream, at a rate of 1.8 tons of green color additive per day. Hot clear glass from the second glass melting furnace 6 is introduced into the chamber 8 by way of glass transport channel 20 at a rate of 57 tons per day. Cold color additive, also in the form of chromic oxide raw material, and at a 3 wt. % mix ratio is introduced into the hot, clear glass stream in channel 20 by way of conduit 38'. In this example, the color additive is introduced at a rate of 1.2 tons per day into the hot, clear glass stream in channel 20.

The particulate color additive material drops by gravity into the glass stream in the color additive chamber 34 and then moves to the reduced cross sectional region 40. The flow rate of the hot clear glass and color additive accelerates in the reduced cross sectional region 40 which prevents backflow of colored glass upstream into the hot glass transport channels 18 and 20.

The heaters 36 positioned in the color additive zone impart additional heat to the color additive and clear glass feedstocks to insure lower viscosity of the glass and uninterrupted flow into the riser and throat portions 42 and 44. In order to maximize the color additive input, and to minimize the potential dusting or pollution problems in the color additive chamber 34, a gas combustion chamber for heating the hot glass in the transport channels 18 and 20 is separated from the electrically heated color additive zone 34 by the skimmer block 32. Thus, by isolating the color additive zone 34 from the gas fired region of the transport channels 18 and 20, there is no need for exhausting hot gases above the hot molten gas surface in the zone 34 and no atmospheric dusting problems. As a result, the amount of color additive introduced into the glass is intensified because no airborne dust losses occur. This factor increases the efficiency of the present process and lowers raw material costs associated with the production of the colored glass. It is contemplated that the color additive may be added in several different forms and formulations, well-known in the art. Specialized glass formulation densifiers may also be utilized to encourage the color additive materials to sink more quickly into the hot glass stream.

The color treatment chamber 8 permits the production of all glass colors employing raw materials as color additives which necessarily lowers the cost of the feed stock materials. Colors such as amber, which heretofore could not be produced in a typical forehearth coloring system are easily made in the treatment chamber of the present invention. The system of the invention also permits rapid color changes while not interfering with ongoing production of clear glass from the furnaces 4 and 6.

As depicted in Figure 1 and as described above in the working example, a presently preferred mode of operation contemplates the use of the two color additive conduits 38 and 38' with the two hot clear glass inputs of transport channels 18 and 20 from two glass melting furnaces 4 and 6. The recycled cullet, the hot glass and the color additive materials enter the chamber 8 under controlled volumetric conditions as well as controlled glass temperature conditions. In order to achieve optimum process levels, control equipment (not shown) is employed at the color additive inlet conduits 38 and 38' and the cullet charger 30, as well as on the power input to the heaters 36 and on the burners firing the chamber 8. These control components are preferably linked by programmable controllers to glass level sensors as well as to the output production of the glass melting furnaces 4 and 6.

It is preferred in certain situations to maintain the glass melting furnaces 4 and 6 in clear glass production so as to increase the furnace refractory life and lower the furnace fuel consumption. This type of furnace utilization naturally increases glass output from a given furnace since downtime required for conventional color changeover is eliminated. In addition, with the use of the color treatment chamber 8, it is possible to utilize additional cullet feedstock which provides additional melt capacity for the entire glass factory, thus increasing total glass output. The invention also permits the use of colored cullet in large quantities and a variety of cullet color values which otherwise could not be accomplished in the prior art.

By use of the movable refractory flow preventer plate positions 24 and 24', as shown in Figure 1, the system can be set up to run only one glass forming machine on colored glass through distribution channel 26 when the flow preventer is set in position 24'. Colored glass can be supplied to a second glass forming machine very quickly by way of channel 28 when the flow preventer plate is moved to position 24.

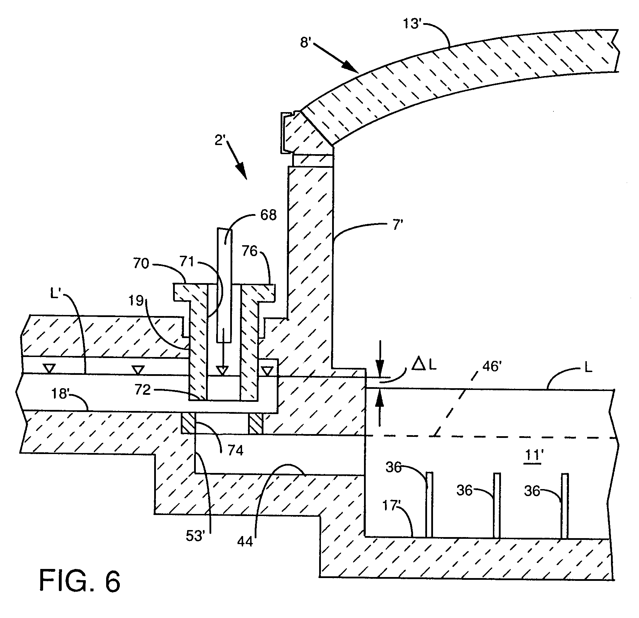

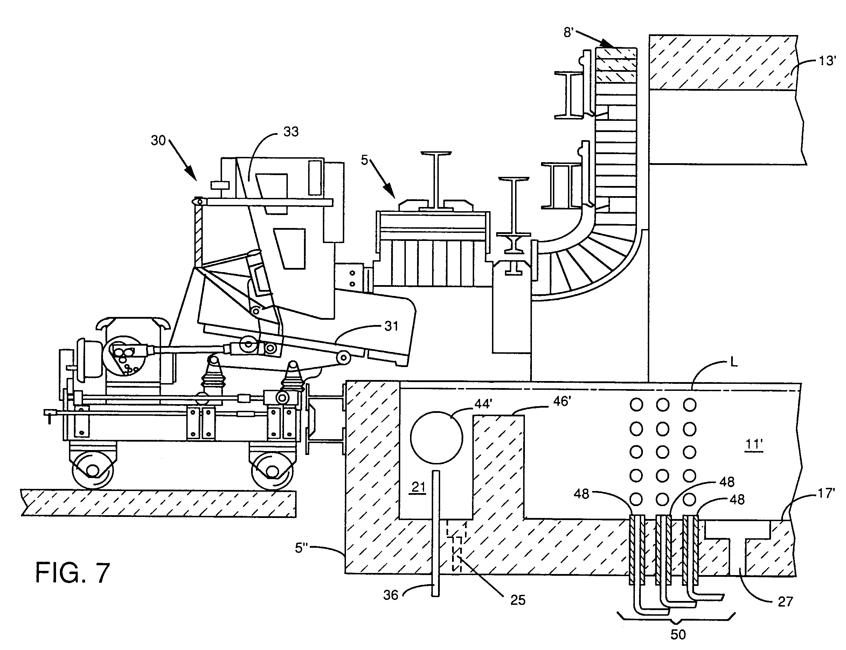

An additional, presently preferred embodiment of the color treatment chamber and flow control valve of the invention is shown in Figures 6 and 7. In this alternate embodiment, the invention generally designated 2' comprises a slightly modified glass treatment chamber 8' and flow control means than the previously described embodiment of Figures 1 through 4. The treatment chamber 8' includes sidewalls 7', roof 13' and a bottom floor 17' lined with a refractory material and defining a glass containment region 11' therein. The level of molten glass contained in the containment region 11' has an upper surface designated by L.

In this embodiment, a weir 46' is positioned at a higher elevation than the weir 46 of Figures 2-4. Likewise, the throat conduit 44' is also at a higher elevation, such that the top of the conduit 44' is at the same elevation as the top edge of the weir 46'. The weir 46' and rear furnace wall 5'', as best seen in Figure 7, define a fill pocket 21 which receives the feedstock materials. A plurality of molybdenum electrodes 36 are positioned in the fill pocket 21 to supply additional heat to the entering feedstock materials at the charging end of the treatment chamber 8'. The weir 46' has a vertical elevation greater than the upper end of the molybdenum electrodes 36. A protective bath of molten glass, thus, remains in the fill pocket 21 surrounding the electrodes 36 when the containment region 11' of the treatment chamber 8' is drained. In this manner, the molybdenum electrodes 36 remain completely covered and protected from the atmosphere by the bath of molten glass and, thus, do not oxidize prematurely. In this manner, the life of the electrodes and refractory surrounding the base of the electrodes is greatly increased to improve the economics of the operation with respect to maintenance and production efficiency. The fill pocket 21 may be selectively drained through a drain orifice 25 formed in the bottom floor thereof. A similar drain orifice 27 is formed through the floor 17' of the containment region 11' to permit periodic draining of the glass, for example, whenever a color change is to be made.

The velocity of the hot glass streams in the distribution channels 18 and 20, as well as the glass level L may be controlled by a valve element 70 shown in Figure 6. The valve 70 is made from a refractory material having a cylindrical shape with an axial bore 71 formed therethrough. The valve 70 is vertically and rotatably movable in an orifice 19 formed at the top of glass transport channel 18'. The valve 70 has a lower seating edge 72 which is adapted to bear against a ring-shaped refractory insert 74 positioned at the upper inlet portion of the riser 53'. Insert 74 is made from a pressed and fired, wear resistant refractory material, such as a chromium-zircon refractory mixture.

The valve element 70 preferably has an outwardly extending flange 76 at an upper end thereof. The flange 76 is adapted to be engaged by a vertically movable drive means (not shown) which imparts a rotative and reciprocating vertical motion to the valve 70 so as to selectively raise or lower the seating edge 72 of the valve relative to the refractory insert 74 surrounding riser 53'. In this manner, the controlled vertical movement of the valve 70, relative to the insert 74, selectively regulates the volumetric flow rate of glass into the riser 53', throat 44' and the treatment chamber 8'. The valve 70 can be moved downwardly to a position where the seating edge 72 bears against the insert 74 to provide a complete shut off of glass flow from one or both of the channels 18 or 20 into the treatment chamber 8'. The valve 70 thus permits the operator to selectively stop glass flow when the chamber 8 is to be drained, for example, when a color change is to be made.

The valve 70 is preferably set at a predetermined height to provide a slightly restricted glass flow into the containment region 11' of the coloring chamber 8'. In this manner, the glass level L' in the transport channel 18' is at a slightly higher elevation than the glass level L in the treatment chamber 8'. The differential glass elevation, designated Δ L in Figure 6, prevents reverse flow of colored glass from the color treatment chamber 8' to the clear glass transport channel 18'. The valve 70 is employed preferably on each of the glass transport channels 18 and 20 to control the flow rate and glass level in each of the transport channels to maintain the desired Δ L elevation differential. In normal operation, it is commonly observed that the glass levels in each of the melting furnaces 4 and 6 are at different levels. Use of the valves 70 in each transport channel compensates for these differing hydrostatic glass pressure levels to maintain a desired glass level L within the treatment chamber 8. Thus, the glass level L in chamber 8 is always below the level L' in the glass transport channels 18 and 20 to prevent reverse flow and color contamination of the clear glass.

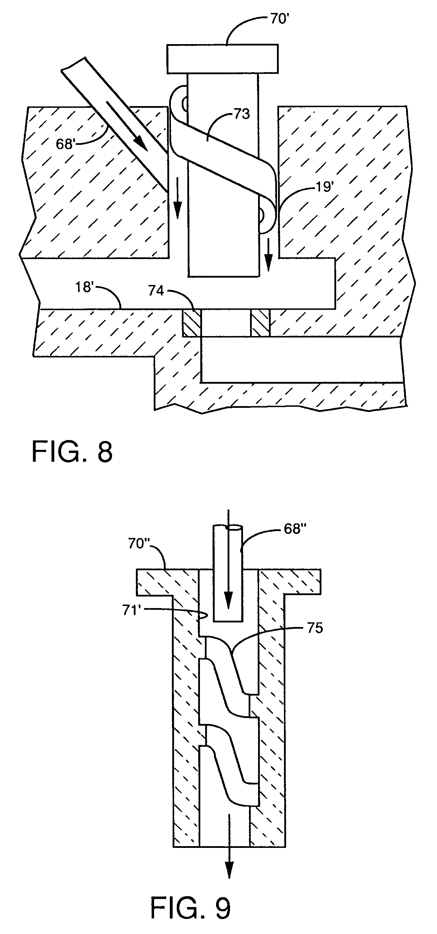

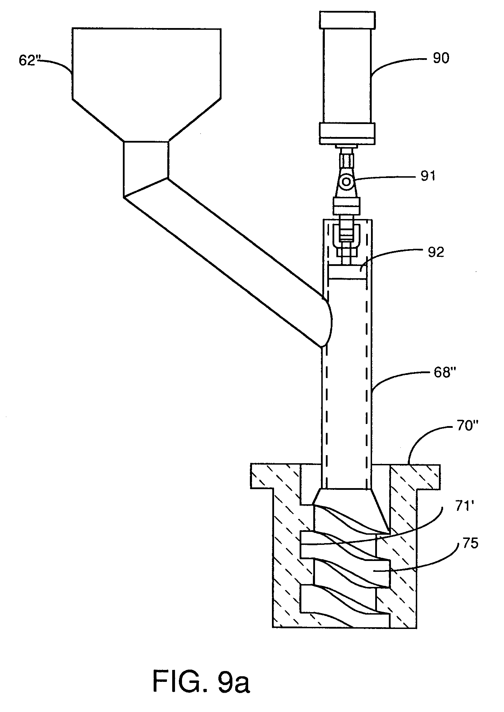

As seen in Figure 6, a color additive conduit 68 may be positioned in the bore 71 of the valve 70 to permit the introduction of color additive particulate material into the clear glass prior to entry into the riser 53'. Various modifications can be made to the valve 70 to assist in driving and/or moving the color additive into the clear glass, as shown in Figures 8, 9 and 9a.

In Figure 8, a valve element 70' has an externally formed screw thread 73 around the outer circumference thereof. Color additive, preferably in particulate raw material form, supplied by way of conduit 68' is driven downwardly into the hot clear glass by rotation of the valve element 70'.

In Figure 9, a valve element 70'' has an internal screw thread 75 formed within the axial bore 71'. Color additive delivered by way of conduit 68'' is driven downwardly into the hot clear glass by rotative movement of the valve element 70'' and internal screw thread 75.

A still further modification of a color additive system is depicted in Figure 9a. Color additive is supplied from a hopper 62'' to the conduit 68''. A hydraulic cylinder 90 having a movable rod 91 drives a ram 92 downwardly within the conduit 68'' to push the color additive into the threaded bore 71' of the rotatable valve element 70''. Accurate metering of the color additive is thus achieved.

As a still further alternative, the color additive can be prepared and mixed in an existing batch house and transported pneumatically, for example, to the treatment chamber 8 and the feed rate can be controlled pneumatically. This arrangement avoids any concerns regarding air pollution resulting from atmospheric exposure of the color additives.

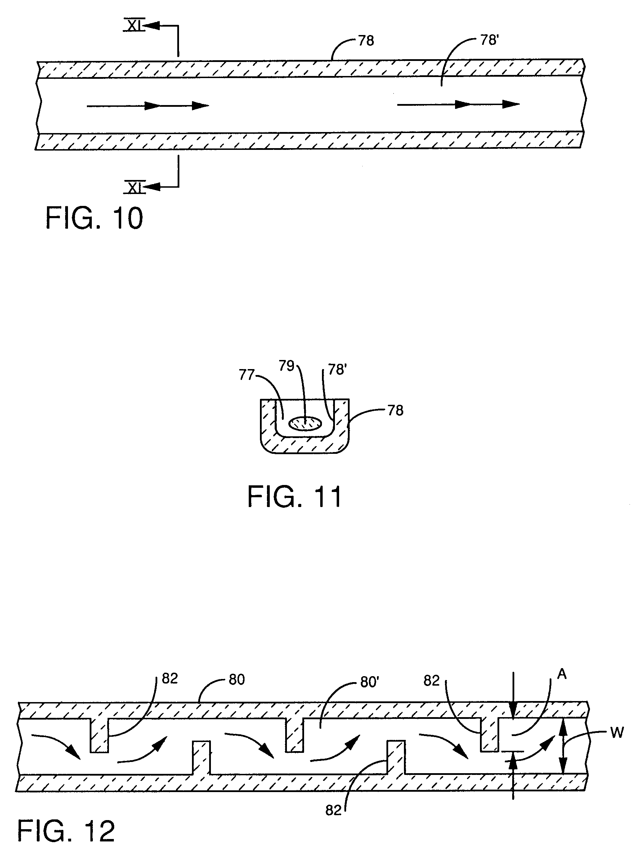

After the colored glass is chemically and thermally homogenized within the treatment chamber 8, as previously described, the treated glass exits the chamber and enters the distribution channel 14 for delivery to one or more glass forming machines. Figures 10 and 11 show a typical glass transport channel 78 similar to transport channel 14 of Figure 1. In this typical prior art glass channel, the hot glass flows within a "U"-shaped containment region 78'. As depicted in Figure 11, a preferential flow is established in the hot glass stream due to temperature variations within the glass stream. A higher viscosity region 77 surrounds a lower velocity region 79 within the central core of the glass stream. The central core region 79 of the glass stream is generally hotter and, therefore, is less viscous and flows at a higher velocity than the surrounding higher viscosity, cooler region 77. An improved glass transport channel depicted in Figure 12 minimizes this unwanted preferential flow by providing a plurality of flow deflector walls 82 which transversely extend into the trough portion 80'. The flow deflector walls 82 extend a distance beyond the longitudinal center line of the trough 80' so as to cause the glass stream to change direction as the glass flows along the trough. The periodic directional changes mix the cooler and hotter regions 77 and 79 so as to homogenize the temperature profile of the flowing glass stream. Thus, the flow deflector walls 82 act as a static stirrer/homogenizer for the hot glass. The glass transport channel 80 preferably has an internal width of between about 16 to 60 inches designated "W" in Figure 12 with a corresponding length "A" of the flow deflector walls 82 having a dimension of between about 9 to 31 inches. Thus, dimension "A" is slightly greater than one half the dimension "W" depicted in Figure 12.

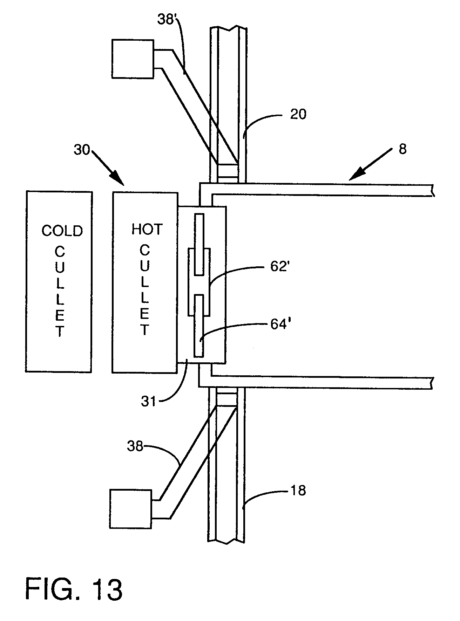

Figure 13 depicts yet a further process variation, according to the present invention, wherein particulate glass composition modifiers may be added by a feed hopper 62' along with the cullet on charger 30. The glass composition modifier material is deposited across the charger plate 31 on top of the cullet layer by way of a pivoted distributor spout 64' which is movable in a lateral direction as previously described in connection with the color additive hopper shown in Figures 5 and 5a. Glass composition modifiers comprise known chemical reagents which are added to the cullet to achieve one or more desired chemical reactions. A glass composition modifier may be employed, for example, to convert an oxidizing clear glass from conduits 18 and 20 to a reduced glass within the treatment chamber 8 which provides certain known benefits readily appreciated by those skilled in the art of glass making. As depicted in Figure 13, either preheated or cold cullet or a mixture of hot and cold cullet may be charged to the treatment chamber 8 by way of the charger 30. The color additive is added as previously described through conduits 38 and 38' to the respective hot clear glass streams flowing within glass transport channels 18 and 20.

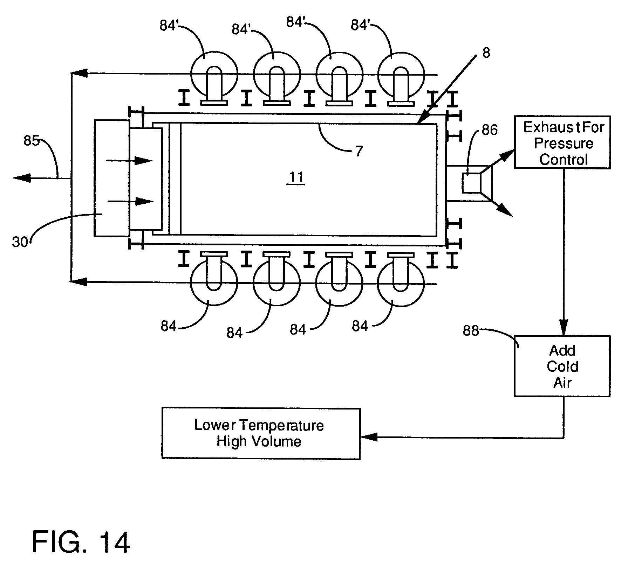

The present invention also employs efficient use of the waste heat generated in the glass treatment chamber 8, as depicted in Figure 14. Opposed sets of conventional, reversible regenerative burners 84 and 84' alternately fire into the treatment chamber 8 in a known manner using, for example, a natural gas and air mixture. After the gaseous products of combustion pass through the regenerators of each of the off-fired burners, the cooled gas stream is exhausted through a conduit 85. Approximately 80% to 95% of the gas input passes through conduit 85 as a cooled, waste gas. Approximately 5% to 20% of the products of combustion are exhausted directly from the chamber 8 for pressure control purposes at conduit 86. This pressure control exhaust stream is conventionally wasted to the atmosphere as a hot flue gas. In the present invention, however, the sensible heat contained in this hot pressure control exhaust gas is reused to preheat feedstock constituents in the instant process. The pressure control exhaust gas exiting at conduit 86 has a temperature of approximately 2300°F as it leaves the treatment chamber 8. The gas gradually cools to about 2000°F as it travels through the exhaust conduit whereupon cooler air is added at a mixing zone 88 to lower the gas temperature and increase the volumetric gas content. The temperature of the diluted exhaust gas stream is controlled between about 600° to 800°F and is used to preheat one or more feedstock constituents, such as batch, cullet, color additive, water and/or any other feedstock constituents, such as the glass composition modifier, as desired. Selected feedstock constituents are preferably preheated at a temperature of between about 400° and 600°F prior to charging into the color treatment chamber 8. Thus, the exhaust gas which customarily is wasted has a secondary use of preheating feedstock in addition to its primary use as a pressure control means within the treatment chamber 8.

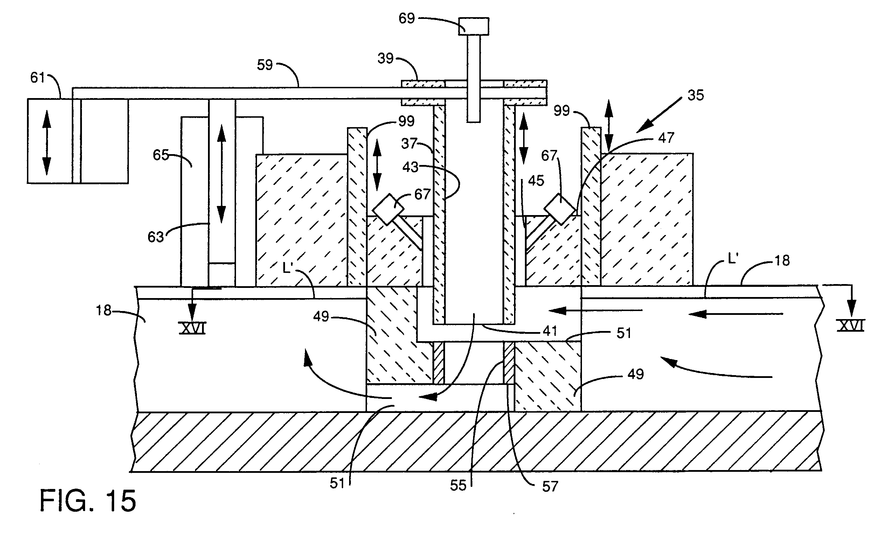

A preferred glass level control and flow regulator valve device identified generally by reference numeral 35 is shown schematically in Figure 1 and in greater detail in Figures 15-17. As seen in Figure 1, the level control and flow regulator valve device 35 is preferably positioned in each of the glass transport channels 18 and 20, adjacent the first entry ends thereof. The valve devices 35 throttle the glass flow and are adapted to control the level L' of glass at a desired elevation in the respective transport channels 18 and 20 notwithstanding the fact that the glass levels in the melting furnaces 4 and 6 may be different. Glass level and flow rate control in the transport channels 18 and 20 are important to insure proper color additive, cullet and other feedstock mix ratios to obtain proper glass quality and color and also to prevent unwanted back flow of colored glass into the clear glass streams.

The valve devices 35 also permit the complete shut off of selected glass streams whenever maintenance might be required downstream of the valve or to selectively divert clear glass from one or both of the transport channels 18 or 20 to one or more of the distribution channels 16, 26 or 28. As previously mentioned, the outlet channel 60 of the treatment chamber 8 is also preferably fitted with a valve device 35 to permit selected flow throttling or complete shut off of the exit glass flow. As will be explained in greater detail hereinafter, the valve devices 35 are externally heated to permit substantially instant opening and closing of the valve. This feature obviates the relatively long downtime delays usually associated with opening prior art dam type refractory plates and provides added flexibility and efficiency to the operation.

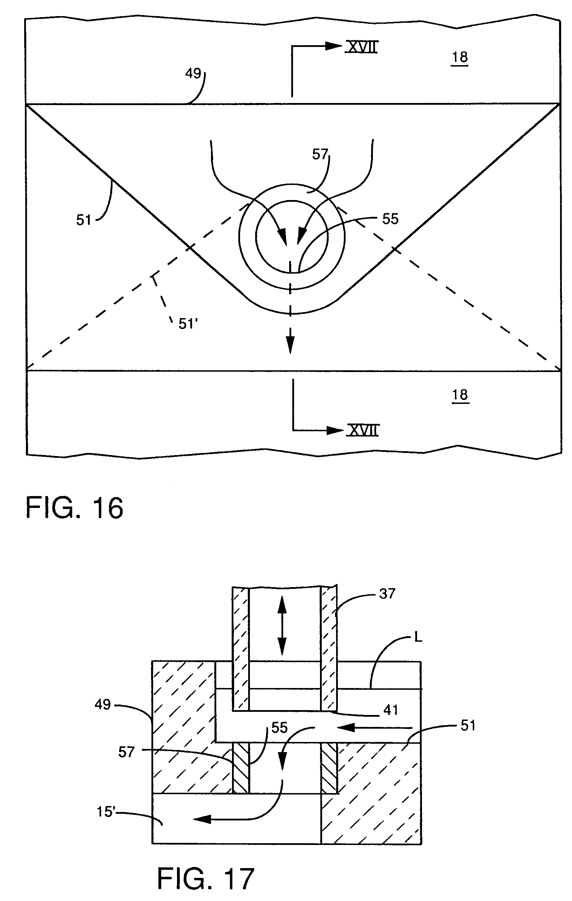

As seen in Figure 15, the glass level control and flow regulator valve device 35 includes a vertically movable cylindrical member 37 of a refractory material. Member 37 has flanged upper end 39, a lower, annular sealing edge 41 and an axial bore 43 extending therethrough. The cylindrical member 37 is fitted within a bore 45 of an upper refractory shape 47 and extends downwardly to a lower refractory shape defining a valve block 49. The valve block 49 has an upper, flared channel 51 which communicates with a lower flared channel 51' in the block 49 by way of a bore 55. The bore 55 is defined by an erosion and wear resistant refractory material in the form of a ring shaped sealing seat or insert 57. As seen in the plan view depicted in Figure 16, the upper, flared channel 51 of the valve block 49 converges inwardly from the sidewalls of the transport channel 18 to the bore 55 of the wear resistant, ring-shaped insert 57. This converging configuration and concurrently decreasing volume of channel 51 causes the glass stream from channel 18 to increase in velocity as it traverses the channel 51 and passes through the bore 55. Such increased stream velocity causes erosive wear, thus, necessitating the use of the refractory insert 57 which can be replaced from time to time, as required. The glass stream assumes a generally "S"-shaped pathway as it passes from the upper channel 51 to the bore 55 and thence through the lower channel 51'. This somewhat tortuous path also acts as a static stirrer and further prevents the formation of unwanted thermal gradients in the glass stream.

As seen in Figure 15, the valve device 35 preferably has a pair of movable, plate-shaped refractory gates 99 fitted immediately upstream and downstream of the cylindrical member 37 and refractory shapes 47 and 49 to isolate those elements in the event maintenance is required, for example, to permit periodic replacement of the ring-shaped insert 57.

The cylindrical member 37 is raised and lowered by an arm 59 attached at one end to the flange 39 and at the other end to an inverter drive mechanism 61. An intermediate support rod 63 is attached to the arm 59 and vertically moves with a bearing sleeve 65. Rod 63 resists the bending moment asserted by the weight of the cylindrical member 37 on the arm 59. A ring of gas fired burners 67 is positioned around the cylindrical member 37, firing within the bore 45 of the upper refractory shape 47. In addition, a gas fired burner 69 is fitted to fire within the axial bore 43 of the cylindrical member 37. In this manner, the valve device 35 maintains the glass as well as the refractory cylindrical member 37 and refractory valve block 49 at an elevated temperature to permit instant glass flow therethrough whenever the valve is opened.

As seen in Figure 15, the bore 43 of cylindrical member 37 is axially aligned with the bore 55 of valve block 49. When selectively lowered by drive 61, the annular sealing edge 41 of the member 37 moves to a seating position bearing directly against the ring shaped insert 57 to completely shut off the glass flow in the transport channel 18. In order to regulate the flow rate of the glass in the transport channel, the cylindrical member 37 is raised or lowered to a selected height by the drive 61 to provide a metered flow rate of glass through the bore 55 of the valve block 49. Glass level sensors (not shown) monitor the respective levels of glass in the treatment chamber 8 and in the transport channels 18 and 20. A level control signal is sent from the sensors to known actuation signal generator devices to actuate the inverter drive 61 to raise or lower the cylindrical member 37 and thus control the glass level at a desired level within the respective transport channels 18 and 20.

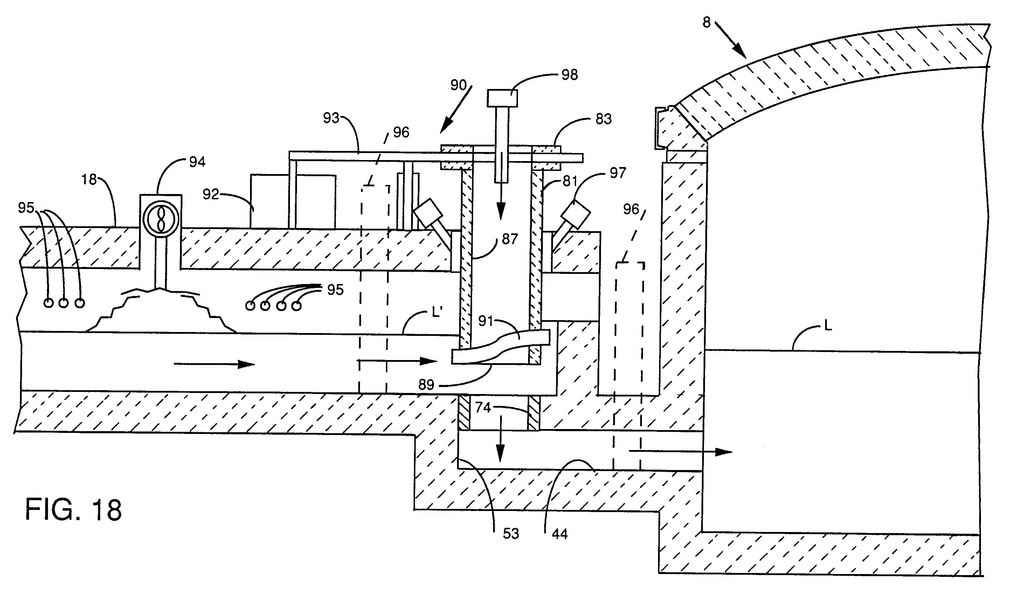

A further presently preferred embodiment of the color additive and flow regulator system of the present invention is shown in Figures 1 and 18, identified generally by reference numeral 90 therein. The color additive and flow regulator system 90 depicted in Figure 18 includes a rotatable, cylindrical valve member 81 fitted through the top of the glass distribution channel 18. The rotatable valve member 81 is made from a refractory material and includes a flanged top 83, an axial throughbore 87 and an annular lower edge 89. The lower end of the valve member 83 also carries an outwardly protruding, helically-shaped thread segment 91 to aid in submerging the particulate color additive material into the glass stream when the valve member 81 is rotated.

A drive motor 92 vertically moves a drive arm 93 and also rotates a drive chain thereon to selectively raise and lower the cylindrical valve 81 while simultaneously rotating the valve and thread segment 91. Thus, the flow rate of glass is further controlled from the channel 18 to the riser 53 by selective vertical movement of the lower annular edge 89 of the valve 81 relative to the orifice in the riser insert 74. An enclosed screw charger 94 preferably delivers metered, controlled amounts of particulate color additive material to the molten glass in the channel 18 upstream a distance from the valve 81. A plurality of gas fired burners 95 are fitted within the transport channel 18 to maintain glass flow and provide additional heat to melt the color additive material so as to commence mixing of the color additive and the glass stream. A pair of plate shaped gates 96 are also provided to isolate the valve 81 from the treatment chamber 8 and from the transport channel 18 if maintenance is required on any of the elements in the color additive and flow regulator system 90.

A burner ring 97 and axial burner 98 are also provided around and within the valve member 81 to deliver additional heat to the glass and refractory elements to overcome the cooling effect of the color additive. Such additional heating insures proper glass flow in the distribution channel 18 through the orifice of insert 74 to the riser 53, throat 44 and to the treatment chamber 8.

While specific embodiments of the invention have been described in detail, it will be appreciated by those skilled in the art that various modifications and alternatives to those details could be developed in light of the overall teachings of the disclosure. The presently preferred embodiments described herein are meant to be illustrative only and not limiting as to the scope of the invention which is to be given the full breadth of the appended claims and any and all equivalents thereof.

## Claims

1. Apparatus for coloring glass in the manufacture of formed glass shapes comprising:
at least one glass transport channel adapted to receive hot glass from a glass melting furnace;
a color treatment chamber having a charging end and an outlet end, joined by opposed sidewalls enclosed by a roof and defining a horizontally extending glass containment region therein;
channel means, including a downflow riser and a horizontal throat communicating at the riser end with the glass transport channel and with the containment region of the treatment chamber at the throat end to permit flow of hot glass from the glass transport channel into the treatment chamber;
a color feeder conduit communicating at a first end with a source of color additive and at a second end with the glass transport channel adjacent the riser and defining a color additive chamber therein, adapted to receive a controlled amount of a color additive for mixing with the hot glass;
heating means in said color additive chamber;
charger means at the charger end of the treatment chamber for introducing cullet into the containment region of the treatment chamber;
heater means associated with the treatment chamber to melt the cullet and further heat the hot glass and color additive to form a molten mixture;
stirring means in the containment region of the color treatment chamber to homogenize the color and temperature of the molten mixture of cullet, hot glass and color additive;
outlet conduit means communicating with the containment region of the color treatment chamber and with a distribution channel for delivery of colored glass to at least one remotely located glass forming machine.

2. The apparatus of claim 1 wherein the glass transport channel in the color additive chamber has a reduced cross section which is adapted to cause an acceleration in the flow rate of hot glass therethrough whereby backflow of hot glass and color additive is prevented.

3. The apparatus of claim 1 wherein the stirring means includes means for introducing air bubbles into the molten mixture.

4. The apparatus of claim 1 including skimmer block means positioned in an upper portion of the glass transport channel adjacent to the color additive chamber adapted to block gaseous flow into said color additive chamber.

5. The apparatus of claim 1 wherein the charger means includes a reciprocating charger plate, a first hopper for feeding cullet onto said charger plate and a second hopper means for supplying color additive material to said charger plate for charging into said treatment chamber.

6. The apparatus of claim 1 including valve means in said glass transport channel to selectively regulate the flow of hot glass to the riser.

7. The apparatus of claim 6 wherein the valve means comprises a cylindrical refractory member having a lower seating edge adapted for rotatable and vertical movement relative to said riser, said cylindrical member having a screw thread means formed on a cylindrical surface thereof, adapted to engage particulate color additive material and submerge said material into the molten glass as the cylindrical member is rotated.

8. A process for producing colored glass comprising:
providing a color treatment chamber;
providing at least one hot glass stream from at least one glass melting furnace;
introducing a color additive into said hot glass stream;
introducing the hot glass and color additive mixture to the treatment chamber;
introducing cullet to said treatment chamber to form a further mixture of cullet, hot glass and color additive;
heating said further mixture in the treatment chamber to form a molten bath of colored glass;
stirring said molten bath within said treatment chamber to homogenize the color and temperature of said bath of molten colored glass; and
transferring said molten colored glass to at least one glass forming machine for producing colored glass shapes.

9. The process of claim 8 wherein at least two glass streams from at least two glass melting furnaces provide clear, hot glass to said treatment chamber.

10. The process of claim 9 including the step of regulating the flow rates of said glass streams to maintain a lower glass level in said treatment chamber than in said glass streams.
